(19) Europäisches Patentamt
European Patent Office
Office européen des brevets

(11) EP 2 209 832 B1

(12) # EUROPÄISCHE PATENTSCHRIFT

(45) Veröffentlichungstag und Bekanntmachung des Hinweises auf die Patenterteilung:
**18.04.2012 Patentblatt 2012/16**

(21) Anmeldenummer: **08849723.5**

(22) Anmeldetag: **14.11.2008**

(51) Int Cl.:
***C08G 63/82*** *(2006.01)*

(86) Internationale Anmeldenummer:
**PCT/AT2008/000412**

(87) Internationale Veröffentlichungsnummer:
**WO 2009/062223 (22.05.2009 Gazette 2009/21)**

(54) **PARTIKULÄRE KATALYSATOR- UND KATALYSATOR/STABILISATOR-SYSTEME ZUR HERSTELLUNG HOCHMOLEKULARER HOMO- UND COPOLYESTER VON L-, D- ODER D,L-MILCHSÄURE**

PARTICULATE CATALYST AND CATALYST/STABILISER SYSTEMS FOR PRODUCING HIGH-MOLECULAR-WEIGHT HOMOPOLYESTERS AND COPOLYESTERS OF L-, D- OR D,L-LACTIC ACID

SYSTÈMES À CATALYSEUR PARTICULAIRE ET À CATALYSEUR/STABILISATEUR PARTICULAIRE POUR LA PRODUCTION D'HOMOPOLYESTERS ET DE COPOLYESTERS D'ACIDE LACTIQUE L, D OU D,L AYANT UN POIDS MOLÉCULAIRE ÉLEVÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.11.2007 AT 18372007**

(43) Veröffentlichungstag der Anmeldung:
**28.07.2010 Patentblatt 2010/30**

(73) Patentinhaber: **JUNGBUNZLAUER AUSTRIA AG**
**1010 Wien (AT)**

(72) Erfinder:
- **RAFLER, Gerald**
  **14473 Potsdam (DE)**
- **RAFLER, Jutta**
  **14473 Potsdam (DE)**
- **WINDSPERGER, Andreas**
  **A-3034 Maria Anzbach (AT)**
- **EDLAUER, Robert**
  **A-2136 Laa a.d. Thaya (AT)**
- **GASS, Josef**
  **A-2265 Drösing (AT)**

(74) Vertreter: **Ellmeyer, Wolfgang**
**Patentanwalt,**
**Mariahilferstrasse 50**
**1070 Wien (AT)**

(56) Entgegenhaltungen:
**EP-A- 1 043 066** **US-A- 5 357 035**
**US-B1- 6 326 459**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur effizienten Herstellung von Polymilchsäuren hoher Molmasse und hoher optischer Reinheit (bei Einsatz der chiralen Monomere) durch selektive Katalyse.

## Stand der Technik

Die internationale Entwicklung am Kunststoffmarkt zeigt, dass Poly-L-milchsäure (PLA) mit ihrem thermoplasttypischen Eigenschaftsbild, den für Thermoplaste und insbesondere Heterokettenpolymere typischen Möglichkeiten zur einsatzspezifischen Adaption der Materialeigenschaften durch Compoundierung und chemische Modifizierung, der biogenen Rohstoffbasis in Kombination mit der biologischen Abbaubarkeit des Polymers die besten Chancen auf dem Markt für alternative Kunststoffe besitzt. Es ist zu erkennen, dass dieser Polymerwerkstoff auf Einsatzfeldern mit nur temporär geforderter Stabilität und schwieriger Rezyklierbarkeit, wie etwa bei

- Hygienematerialien (Babywindeln, Inkontinenzartikeln),
- ausgewählten Verpackungsmitteln, insbesondere Schalen für Obst, Fleisch- und Wurstwaren sowie Fisch,
- diversen Medizinprodukten mit Einwegcharakter,
- Folien für die Land- und Gartenwirtschaft sowie Pflanzcontainern,

ein breiter Markt mit hohem Wachstumspotenzial zur Verfügung steht. Bei entsprechender Molmasse und gegebenenfalls Stabilisierung weist dieser Kunststoff hohe Nachhaltigkeit aber auch realistische Chancen zur Substitution konventioneller Polyestermaterialien bei Synthesefaserstoffen für hochwertige Funktionsbekleidung (Sport, Freizeit) sowie als Polymergranulat für die Spritzguss- und Extrusionsverformung zu langzeitstabilen Formkörpern auf.

Die Herstellung des Polymers erfolgt in einem mehrstufigen Prozess mit biotechnologischen und chemischen Verfahrenstufen, der im Wesentlichen umfasst:

- Hydrolyse stärkehaltiger Substrate zu Glucose;
- Fermentation von Glucose zu L-Milchsäure;
- Kondensation zu niedermolekularer Poly-L-milchsäure;
- zyklisierende Depolymerisation zu L,L-Dilactid;
- Ringöffnungspolymerisation des L,L-Dilactids zu Poly-L-milchsäure;
- Stabilisierung und Entmonomerisierung des Polymers.

Dieser mehrstufige Prozess der Herstellung von Poly-L-milchsäure wird in einer Vielzahl von Patenten vor allem der Cargill Inc. USA (vgl. beispielsweise US 6.277.951, US 6.005.067, US 5.357.035, US 6.291.597, CA 2.128.509), der Dainippon Ink & Chem. Japan (vgl. beispielsweise US 5.844.066, US 5.616.657, US 5.605.981, US 5.403.897), Mitsui Toatsu Japan (vgl. beispielsweise US 5.194.473), Neste Oy Finnland (WO 98/36008), Brussels Biotec (vgl. etwa GB 2.407.572, WO 98/02480, DE 69905016, US 6.489.508, US 2004/0014991) oder der Shimadzu Japan (vgl. beispielsweise US 5.770.682, US 5.866.677, JP 7206851) beschrieben.

Die chemischen Prozessstufen der Herstellung von L-, D- und D,L-Polymilchsäure:

- Polykondensation der Milchsäure;
- zyklisierende Depolymerisation der Polymilchsäure;
- Ringöffnungspolymerisation der Diester;

können prinzipiell durch Katalysatoren bzw. Initiatoren beschleunigt werden, wobei der Katalysatoreinsatz erst zu wirtschaftlichen Raum/Zeit-Ausbeuten des Prozesses bzw. materialwirtschaftlich interessanten Produkten führt. Den Reaktionen liegen unterschiedliche Mechanismen zugrunde, und damit müssen auch verschiedenartige Katalysatoren für die Aktivierung der einzelnen Prozessstufen ausgewählt werden.

Der erste chemische Verfahrensschritt, die Polykondensation der L-Milchsäure, ist eine typische Polykondensation vom AB-Typ mit OH- und COOH-Gruppe am Monomer mit Abspaltung von $H_2O$ als niedermolekulare Komponente und Aktivierung durch einen $A_{Ac}2$-Mechanismus. Entsprechend den für $A_{Ac}2$-Reaktionen typischen Reaktionsschritten erfolgt primär Addition elektrophiler Katalysatoren (vorzugsweise Protonen, aber auch Metall- bzw. Nichtmetallkationen) an die Carbonylgruppe mit nachfolgender Addition nucleophiler Reaktionspartner an den Carbonylkohlenstoff und Eliminierung des ursprünglichen Substituenten. Dem Stand der Technik entsprechend wird wässrige L-Milchsäure mit einem Milchsäuregehalt > 80 %, wie sie bei der Aufarbeitung der Fermentationsbrühen erhalten wird, zur Herstellung der niedermolekularen Poly-L-milchsäure eingesetzt. In Gegenwart von "freiem" Wasser ist die Protonenaktivität der Milchsäure ausreichend für die Katalyse der Polyveresterung. Hochkonzentrierte bzw. wasserfreie Milchsäure erfordert jedoch

geeignete Katalysatoren infolge unzureichender Protonenaktivierung durch geringe Dissoziation der Carboxylgruppen. Auch für die Herstellung von Poly-L-milchsäuren höherer Molmassen ist der Einsatz geeigneter Katalysatoren notwendig, da die erforderliche COOH-Gruppenkonzentration infolge zunehmender Molmasse rasch abnimmt. Parallel dazu verringert sich dann auch der autokatalytische Effekt der COOH-Gruppen. Für die Katalyse der Polyveresterung in Gegenwart von Metallverbindungen (Halogeniden, Carboxylaten, Alkoxiden) ist eine Protonenkatalyse durch aus den Metallionen und der Milchsäure gebildeten Alkoxosäuren bzw. aziden Lactatokomplexen entsprechend Schema 1 anzunehmen (G. Rafler, Praxis der Naturwissenschaften (PdN-Chis) 54 H7, 12 (2005), sowie G. Rafler et al., Acta Polymerica 44, 315 (1988)). Dabei ist zu berücksichtigen, dass diese Katalysatoren auch in der wasserfreien Polymerschmelze aktiv sind. Damit können dann auch höhermolekulare Ausgangsprodukte für den folgenden Prozessschritt eingesetzt werden, wie die Anmelderin in der parallelen Patentanmeldung "Verfahren zur Herstellung zyklischer Diester von L-, D- und D,L-Milchsäure" zeigen konnte. Aber auch synthetisch hergestellte D,L-Milchsäure, die verfahrensbedingt wasserfrei hergestellt werden kann, lässt sich auf diese Weise effizient polykondensieren. Daneben können diese Katalysatoren auch für die Polykondensation von Milchsäureestern genutzt werden, die ebenfalls in wasserfreiem Medium ablaufen.

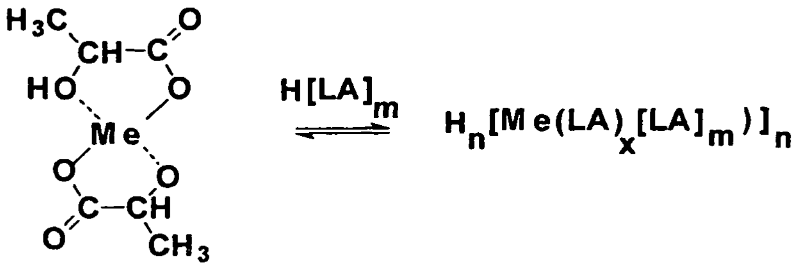

Me: komplexbildendes Metall, wie z.B. Ti(IV), Sn(IV), Sb(III), Zn(II), Pb(II)
LA: Milchsäure, OH-Gruppen

Schema 1. Metall/Milchsäure-Komplexe zur Herstellung höhermolekularer Polymilchsäuren

Für die zyklisierende Depolymerisation, die zweite chemische Verfahrenstufe des Gesamtprozesses, gelten vorrangig die thermodynamischen Grundlagen der Ring/Ketten-Gleichgewichte zyklischer Ester (Lactone) bzw. Amide (Lactame) (vgl. beispielsweise H.-G. Elias: Makromoleküle, 5. Aufl., Hüthig & Wepf 1999). Im Gegensatz zur autokatalysierten Polykondensation der Milchsäure werden zur Beschleunigung der zyklisierenden Depolymerisation der Polymilchsäure zu Dilactid Katalysatoren, vorzugsweise Zinn(II)-salze und Zinn(II)-oxid, in allen beschriebenen Verfahren eingesetzt. Die Aktivierung dieser Eliminierungsreaktion erfolgt durch Addition elektrophiler Katalysatoren mit nachfolgender Addition der nucleophilen OH-Endgruppe des Polyesters an den Estercarbonylkohlenstoff und Eliminierung unter Ringbildung entsprechend Schema 2. Dabei können intermediär zunächst auch Makrozyklen gebildet werden, die dann zum dimeren Zyklus weiter gespalten werden. Da die Depolymerisation infolge der Molmasse des Polymers in einem weitgehend nichtwässrigen System der Polymerschmelze durchgeführt wird, dominiert die Katalyse durch Lewis-Kationen der eingesetzten oder aus der Polykondensationsstufe noch vorhandenen Metallverbindungen.

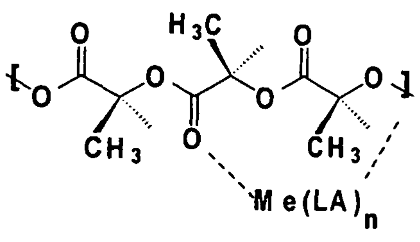

Me: Sn(II), Fe(II), Zn(II)
LA: Milchsäure, OH-Gruppen

Schema 2. Katalysemechanismus der zyklisierenden Depolymerisation

Die Ringöffnungspolymerisation des Dilactids wird als Polymerbildungsreaktion von der Mehrzahl der Autoren in der wissenschaftlichen Fachliteratur dem Insertionstyp mit Einlagerung des Monomers in die Polymer/Katalysator-Bindung zugeordnet. Bei einem Polyinsertionsmechanismus für das Kettenwachstum (H.-R. Kricheldorf, Macromol. Symp. 153, 55 (2000), oder Chemosphere 43, 49 (2001)) wird das Dilactid in die Polymer/Metall-Bindung unter Acylsauerstoffspaltung insertiert (Übersicht zu Lacton- und Lactidpolymerisationen in A. Löfgren et al., J. Macromol. Sci. - Rev. Macromol. Chem. Phys. C 35, 379 (1995)). Die Insertion setzt eine relative Stabilität der Polymer/Metall-Bindung voraus. Die primäre Aktivierung erfolgt durch Anlagerung der Lewis-Säure an den exogenen Carbonylsauerstoff (Schema 3).

Infolge der parallel ablaufenden inter- und intramolekularen Zwischenkettenaustauschreaktionen ist jedoch ein komplexerer Mechanismus wahrscheinlich, bei dem die Polyinsertion den "idealisierten" Fall darstellt.

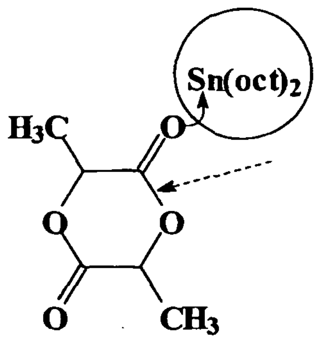

Schema 3. Primärschritt der Aktivierung der Ringöffnungspolymerisation von Dilactid

Im Gegensatz zur Mehrzahl bekannter Polymerisationsprozesse für olefinische oder Vinylmonomere verlaufen bei der Ringöffnungspolymerisation der zyklischen Ester und Diester Monomerumsatz und Molmasse parallel. Hoher Monomerumsatz entspricht zumeist auch hoher Molmasse (vgl. G. Rafler, J. Lang, M. Jobmann, I. Bechthold, Macromol. Mater. Eng. 286, 761 (2001)). Darüber hinaus ist zu berücksichtigen, dass die überwiegend eingesetzten zinn(II)-haltigen Katalysatoren hinsichtlich der Molmasse des Polymers einen technisch schwer beherrschbaren Polymerisationsverlauf mit ausgeprägtem Extremalcharakter verursachen (US 6.657.042). Dies bedeutet, dass möglichst hohe Umsätze bei kurzen Polymerisationszeiten angestrebt werden müssen, um möglichst nahe dem Molmassenmaximum zu bleiben und den Einfluss katalysator- und temperaturbedingter Abbauprozesse gering zu halten.

Zur Minderung des Einflusses prozess- und katalysatorbedingter Depolymerisations- bzw. Abbauprozesse werden Reduktion der Zinn(II)-Konzentration durch Einsatz von Katalysatorkombinationen (US 6.657.042) oder vor allem unterschiedlichste Formen der Stabilisierung mit vorzugsweise phosphorhaltigen Stabilisatoren vorgeschlagen (WO 03/87191, DE 69328822, EP 0.615.532, DE 69330046).

Unabhängig von technologischen oder apparatetechnischen Verfahrensvarianten, insbesondere hinsichtlich der eingesetzten Katalysatoren, werden in den bereits genannten Patentschriften jeweils homogenkatalytische Prozesse beschrieben. Dies ist für Verfahren in schmelzflüssiger Phase, bei denen Polymere gebildet oder in denen Polymere umgesetzt werden, allgemein geübte Praxis. Im Gegensatz zu Reaktionen in Gas- oder niedrigviskosen Flüssigphasen sind heterogenkatalytische Prozesse in Polymerschmelzen infolge hoher Schmelzviskositäten, mangelnder Abtrennbarkeit des Katalysatorträgers, hoher Reaktantenkonzentration etc. technisch schwer beherrschbar.

## Aufgabe der Erfindung

Vor dem Hintergrund des dargestellten Standes der Technik bei der Herstellung von Polymilchsäuren als Polymerwerkstoff für Verpackungsmaterialien oder hochwertige Synthesefasern, bei diversen Consumerprodukten mit Einmal- bzw. temporärer Anwendung oder für extra- und intrakorporale Anwendungen in der Medizin liegt der Erfindung die Aufgabe zugrunde, ein wirtschaftlich effizientes Verfahren zur Herstellung dieser nachhaltigen Polymere vorzuschlagen, mit dem nicht nur alle prozessspezifischen Zwischen- und Endprodukte in verbesserter Ausbeute, hoher Reinheit und verbesserten einsatzspezifischen Eigenschaften hergestellt werden können, sondern das auch in allen Prozessstufen hohe verfahrenstechnische Sicherheit und Konstanz der eingestellten Zwischen- und Endproduktparameter garantiert.

## Beschreibung der Erfindung

Erfindungsgemäß wird dies durch ein Verfahren zur Herstellung von hochmolekularen Homo- und Copolyestern

von L-, D- bzw. D,L-Milchsäure erreicht, welches die Verfahrensstufen i) Polykondensation von Milchsäure oder Polyumesterung von Estern davon zu polymerer Milchsäure, ii) zyklisierende Depolymerisation der polymeren Milchsäure zu Dilactiden und iii) Ringöffnungspolymerisation der Dilactide bzw. von Gemischen davon mit geeigneten Comonomeren umfasst und dadurch gekennzeichnet ist, dass in zumindest einer der Verfahrensstufen i) bis iii) ein partikulärer Katalysator und/oder ein partikulärer Stabilisator, die jeweils einen mittleren Partikeldurchmesser von 1 bis 100 nm aufweisen, in einem heterogenen Reaktionsgemisch eingesetzt wird/werden. Vorzugsweise wird in allen chemischen Verfahrensstufen der Herstellung von L-, D- oder D,L-Polymilchsäure ein Katalysator und/oder Stabilisator aus einem partikulären Material im obigen Größenbereich eingesetzt.

Bei Katalysatoren bzw. Stabilisatoren mit mittleren Partikeldurchmessern von 1 bis 100 nm zeigen die Katalysatorpartikel in diesem Größenbereich eine mit gelösten Katalysatoren vergleichbare Aktivität. Katalysatorpartikel im niedrigen Nanometerbereich verhalten sich somit im Falle von Aktivierungen an Makromolekülen in schmelzflüssiger Phase ähnlich wie gelöste Katalysatormoleküle, vor allem, wenn gemäß bevorzugten Ausführungsformen der Erfindung eine Agglomerierung der Nanopartikel nach dem Dispergieren durch geeignete Maßnahmen, wie z.B. geeignete Auswahl des Dispergiermediums, Einstellung der Konzentration, Oberflächenmodfizierung der Partikel etc., verhindert wird. Darüber hinaus sind die Partikel natürlich leichter aus dem an sich heterogenen Reaktionsgemisch abtrennbar als homogen gelöste Katalysatoren bzw. Stabilisatoren, sofern aktiv deren Agglomerisation herbeigeführt wird.

Vorzugsweise weist der partikuläre Katalysator bzw. Stabilisator einen mittleren Partikeldurchmesser von 3 bis 20 nm auf. Durch einen kleineren Partikeldurchmesser sind mehr oberflächennahe Atome bzw. funktionelle Gruppen im Verhältnis zur Gesamtanzahl der Atome vorhanden, was eine effektivere Katalyse ermöglicht.

In bevorzugten Ausführungsformen der Erfindung umfasst der partikuläre Katalysator bzw. Stabilisator ein partikuläres anorganisches Oxid als Trägermaterial. Anorganische Oxide eignen sich aufgrund ihrer verbreiteten Verfügbarkeit und ihrer geringen Kosten ausgezeichnet als Trägermaterial für Katalysatoren und Stabilisatoren geeignet. Vorzugsweise ist das partikuläre anorganische Oxid Siliziumdioxid, Aluminiumoxid oder ein Gemisch davon, da diese Oxide allgemein erhältlich und kostengünstig sind und bei Verwendung mit Katalysatoren hervorragende Ergebnisse liefern. Beispielsweise eignen sich die AEROSILE und AEROXIDE der Degussa AG.

Gemäß der Erfindung werden vorzugsweise Trägermaterialien ähnlicher Hydrophilie bzw. Hydrophobie wie der Katalysator bzw. Stabilisator eingesetzt. Das heißt, dass bei hydrophoben Katalysatorverbindungen das Trägermaterial vorzugsweise ebenfalls hydrophob und bei hydrophilen Katalysatorverbindungen das Trägermaterial vorzugsweise ebenfalls hydrophil ist. Dadurch wird jeweils eine bessere Haftung des Katalysators/Stabilisators am Träger erreicht. Die gewünschte Hydrophilie bzw. Hydrophobie des Trägers kann durch Oberflächenmodifizierung eingestellt werden.

In bevorzugten Ausführungsformen des erfindungsgemäßen Verfahrens umfasst der partikuläre Katalysator zumindest eine an das Trägermaterial adsorbierte, organische bzw. anorganische Metallverbindung, da solche Verbindungen erwiesenermaßen gute katalytische Aktivität für die Reaktionen zur Herstellung von Polymilchsäure aufweisen. Die zumindest eine organische bzw. anorganische Metallverbindung kann dabei abhängig von der Verfahrensstufe aus Verbindungen von Titan, Zirkonium, Zinn, Zink, Blei und Antimon ausgewählt werden. Vorzugsweise können Ti(IV)-, Zr (IV)-, Sn(IV)-, Sn(II)- und Zn(II)-Verbindungen verwendet werden. Als Trägermaterialien für diese prozessstufenabhängig eingesetzten Katalysatoren sind AEROSILE und AEROXIDE der Degussa AG infolge des zur Verfügung stehenden Größenbereichs und der hydrophilen oder hydrophoben Oberflächenmodifizierung besonders geeignet. In Abhängigkeit von den Grenzflächeneigenschaften des speziellen Katalysators stehen für die hydrophoberen Katalysatoren wie Sn (II)-octonoat, Sn(IV)-alkoxid oder $Sn(Phen)_4$ hydrophobe Trägermaterialien für eine optimale Adsorption des Katalysators zur Verfügung. Andererseits werden für hydrophile Katalysatoren, wie Sn(II)-chlorid, Ti(IV)- oder Zr(IV)-Chelatkomplexe, entsprechende Trägermaterialien mit hydrophilen Oberflächeneigenschaften eingesetzt. Diese Metallverbindungen ergeben in den jeweiligen Verfahrensstufen ausgezeichnete Ausbeuten.

Das Verhältnis der Komponenten in den Katalysatorpartikeln kann infolge der großen inneren und äußeren Oberfläche und ihrer ausgeprägten Adsorptionsfähigkeit in weiten Grenzen von 300:1 < Träger/Katalysator < 1:3 variiert werden. Damit ist eine optimale Abstimmung des Katalysators sowohl auf verfahrensbedingte als auch materialspezifische Anforderungen möglich.

Die extreme Adsorptionsfähigkeit der AEROSILE und AEROXIDE erlaubt auch die parallele Ausrüstung mit gegebenenfalls erforderlichen oder gewünschten Cokatalysatoren oder Stabilisatoren.

Hergestellt werden die Katalysator- bzw. Stabilisatorpartikel durch Adsorption des gelösten Katalysators bzw. Stabilisators in einem Lösungsmittel, das auch entsprechende Dispergiereigenschaften für die AEROSILE und AEROXIDE aufweist. Die Katalysatorpartikel können direkt aus diesen Dispersionen oder nach Isolierung und Trocknung auch als Feststoff dosiert werden.

Vorzugsweise weist der in Verfahrensstufe i), d.h. bei der Polykondensation der L-, D- bzw. D,L- Milchsäure bzw. Polyumesterung ihrer Ester, verwendete partikuläre Katalysator als auf dem Träger adsorbierte Metallverbindung hydrolysestabile Komplexe von Titan bzw. Zirkonium entsprechend der Struktur

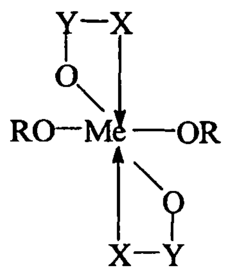

worin
Me: Ti, Zr;
R: -H, -Alkyl, -Aryl, $-PO(OR')_2$, -HPOOR', $-SO_2R'$;
X: -O-, -S-; und
Y: >CH-, >C<,

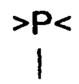

sind, auf. Diese Metallverbindungen haben sich als äußerst effektiv erwiesen. Als katalytisch aktive Titanverbindungen für die Partikelherstellung können auch Titanalkoxide, vor allem Titantetrabutylat, und Oligotitanate sowie Titanchelate, wie z.B. Dihydroxybis(ammoniumlactato)titanat (Tyzor LA, DuPont) (Schema 4, Mitte), Isopropyltri(dioctylphosphato) titanat (KR 12, Kenrich Petrochemicals), Isopropyltri(dioctylpyrophosphato)titanat (KR 38 S, Kenrich Petrochemicals) (Schema 4, rechts) und Diisopropylbis(acetylacetonato)titanat (Schema 4, links) eingesetzt werden.

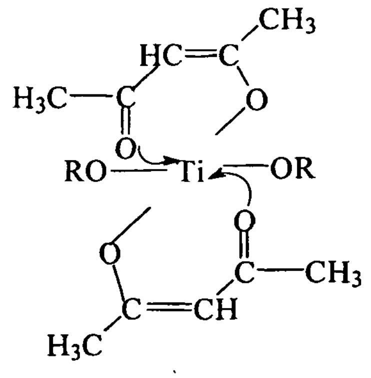
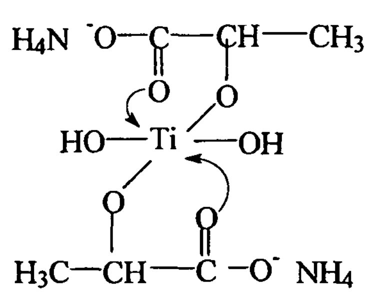
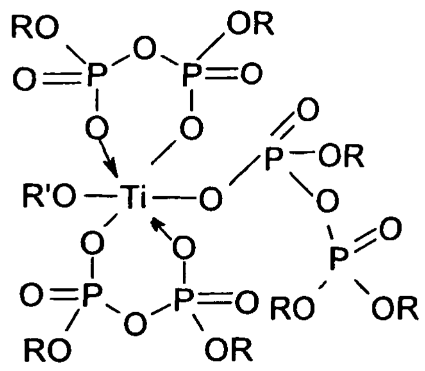

**Schema 4. Chelatkomplexe von Titan zur Herstellung der erfindungsgemäßen Katalysatorpartikel**

Dabei können die Titan- bzw. Zirkonium-Komplexe auf den ausgewählten Liganden auch weitere Funktionalitäten aufweisen. Diese können beispielsweise zur Verbesserung der Katalyse und damit zu höheren Ausbeuten, aber auch zur Anhaftung am Trägermaterial, Dispergierung des Katalysators im Medium etc. beitragen.

In alternativen bevorzugten Ausführungsformen der Erfindung weist der partikuläre Katalysator als auf dem Träger adsorbierte Metallverbindung hydrolysestabile Chelatkomplexe von Titan bzw. Zirkonium in Kombination mit Zinn (II)-halogeniden auf, wodurch die katalytische Aktivität deutlich verbessert werden kann.

In Verfahrensstufe ii), der zyklisierenden Depolymerisation der Poly-L-, Poly-D- bzw. Poly-D,L-Milchsäure, weist der partikuläre Katalysator als auf dem Träger adsorbierte Metallverbindung vorzugsweise Zinn(II)-halogenide bzw. Zinn(II)-carboxylate auf. Diese ergeben eine höhere Ausbeute an Dilactid.

In Verfahrensstufe iii), der Ringöffnungspolymerisation zyklischer Ester und Diester, weist der partikuläre Katalysator als auf dem Träger adsorbierte Metallverbindung vorzugsweise organische Zinn(II)- bzw. Zinn(IV)-verbindungen auf, da diese sehr effektive Katalysatoren für Ringöffnungspolymerisationen sind. Noch bevorzugter weist der partikuläre

Katalysator in dieser Verfahrensstufe als auf dem Träger adsorbierte Metallverbindungen organische Zinn(II)- bzw. Zinn (IV)-verbindungen in Kombination mit Titan(IV)-alkoxiden auf, da eine Kombination dieser organischen Metallverbindungen eine raschere Ringöffnungspolymerisation ermöglicht.

Allgemein kann angemerkt werden, dass zur Erhöhung der katalytischen Aktivität und zur technologischen Vereinfachung des Verfahrens die Titanverbindungen bei ähnlichen Grenzflächeneigenschaften gemeinsam mit Zinn (II)-halogeniden, Zinn(II)-carboxylaten oder Zinn(IV)-alkoxiden bzw. mit Verbindungen von Zink oder Antimon auf die Nanopartikel vom AEROSIL- bzw. AEROXID-Typ aufgebracht werden können. Zinn(II)- und in geringerem Umfang Zinn (IV)-Verbindungen weisen gegenüber Polykondensationsreaktionen zwar geringere katalytische Aktivität als Titanverbindungen auf, dafür sind sie aber aktivere Depolymerisations- und Polymerisationskatalysatoren. Durch die Fixierung ist es möglich, Ti/Sn-Kombinationen in der Polykondensationsstufe einzusetzen. Damit bietet die Katalysatoroptimierung im Verfahren der vorliegenden Erfindung durch Trägerfixierung optimale Voraussetzungen für eine technologische und/ oder apparative Prozessintegration bei Erhalt der Verfahrensvorteile, die aus der Aktivierung der Polykondensation der Milchsäure resultieren. Es können auch mit den Ti/Sn-Nanopartikeln höhermolekulare Polymilchsäuren zur Optimierung des Depolymerisationsprozesses und zur Herstellung von Rohdilactiden höherer Reinheit und Ausbeute erhalten werden (vgl. Tabellen 1-3).

Nanopartikuläre Titan-, Zinn- und Zinkkatalysatoren weisen unabhängig von der Struktur der Verbindung durch die Adsorption höhere hydrolytische und thermische Stabilität auf, so dass mit diesen Katalysatoren bzw. Katalysatorkombinationen auch Milchsäuren mit höheren Wassergehalten direkt polykondensiert werden können, wobei als zusätzlicher Effekt durch die beschleunigte Polykondensation eine Reduktion der Flüchtigkeit von Milchsäure bei Entwässerung und Polykondensation beobachtet wird.

Durch den Einsatz der erfindungsgemäßen, auf Nanopartikeln fixierten Katalysatoren bzw. Katalysatorkombinationen können höhermolekulare Polymilchsäuren mit zahlenmittleren Molmassen bis 10.000 g/mol und hoher Prozessgeschwindigkeit durch Polykondensation bei schonenden Temperaturen hergestellt und diese dann der Depolymerisationsstufe zugeführt werden.

Tabelle 1. $M_n$-Werte von Polykondensaten der L-Milchsäure in Abhängigkeit vom eingesetzten Katalysator

| Polykondensationsbedingungen: T: 180 °C; p: 1,6 kPa; t: 4 h. | | |
|---|---|---|
| **Katalysator** | **$10^4$ [mol/mol]** | **$M_n$ [g/mol]** |
| Ohne | | 550 |
| Tyzor LA, gelöst | 1,0 | 2300 |
| Tyzor LA, gelöst | 3,0 | 3500 |
| Tyzor LA, nanopartikulär | 1,0 | 2500 |
| Tyzor LA, nanopartikulär | 3,0 | 3700 |
| Tyzor LA, nanopartikulär | 6,0 | 5000 |
| Tyzor LA + $SnCl_2$, nanopartikulär | 4,0/3,0 | 6000 |

Die beanspruchten nanopartikulären Katalysatoren können auch zur Aktivierung der Polyumesterung von Milchsäureestern zu Polymilchsäuren entsprechend Gl. (1) eingesetzt werden:

$$n\ CH_3CH(OH)COOR \leftrightarrow [-OCH(CH_3)CO-]_n + (n-1)\ ROH \qquad \text{Gl. (1)}$$

worin R $-C_2H_5$, $-C_3H_7$ oder $-C_2H_4OH$ ist.

Auch die Polykondensation von Milchsäure/Milchsäureester-Gemischen wird durch diese Katalysatoren beschleunigt. Milchsäureester bilden eine Alternative zu den klassischen Verfahren der Milchsäurereinigung durch Membran- oder Fällungsprozesse. Sie können destillativ aus der Rohmilchsäure nach Veresterung abgetrennt werden.

Es können auch in der Depolymerisationsstufe Nanopartikel zur Aktivierung der Dilactidbildung eingesetzt werden. Hierzu werden AEROSILE bzw. AEROXIDE mit Zinn(II)-halogeniden bzw. Zinn(II)-carboxylaten, die entsprechend dem Stand der Technik als Katalysatoren der Ringöffnungspolymerisation sowie der zyklisierenden Depolymerisation bei nahezu allen bekannt gemachten Verfahren verwendet werden (vgl. die bereits aufgeführten US-, GB- und CA-Patentschriften), analog der Verfahrensweise für die nanopartikulären Polykondensationskatalysatoren aus Lösung beladen. In Abhängigkeit von der gewählten Technologie können die zinnhaltigen Nanopartikel der Polymilchsäureschmelze nach beendeter Polykondensation oder bereits in der Polykondensationsstufe in Form der Ti/Sn-Katalysatorkornbinationen zugefügt werden. Die Depolymerisation der Polymilchsäuren erfolgte dem Stand der Technik gemäß bei Temperaturen von 180 bis 240 °C unter Vakuum von 133 Pa mit Abtrennung des gebildeten Dilactids über eine beheizte Kolonne. Ebenso dem Stand der Technik entsprechend kann das Rohlactid destillativ, z.B. durch Rektifikation, oder durch Kristallisation, aus der Schmelze oder einer Lösung, gereinigt werden.

Gemäß der Erfindung hergestellte höhermolekulare Polyester der L-, D- und D,L-Milchsäure bilden die entsprechenden Dilactide in höherer Ausbeute und höherer Reinheit sowie mit größerer Geschwindigkeit (siehe Tabellen 2-4). Molmasse und Endgruppenkonzentration sind indirekt proportional. Dies bedeutet, dass bei höheren Molmassen weniger OH- und COOH-Endgruppen für geschwindigkeitshemmende und ausbeutemindernde Parallelreaktionen der Depolymerisation zur Verfügung stehen. Auch Folgereaktionen dieser unerwünschten Parallelreaktionen werden reduziert. Vor allem das bei der Veresterung gebildete Wasser kann bereits gebildetes Dilactid in der Schmelze bzw. in den Destillaten zu linearem Dimer oder Milchsäure hydrolysieren (Schema 5).

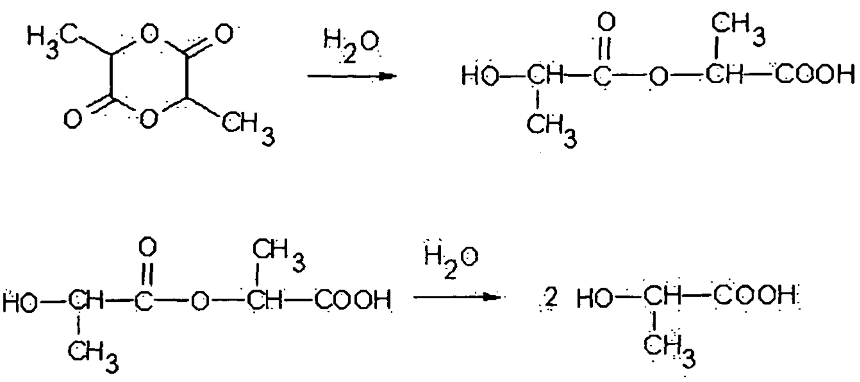


**Schema 5. Stufenweise Hydrolyse der Dilactide**

Die Menge des in den Endgruppen immanent "gebundenen" Wassers, das potenziell für die Dilactidhydrolyse zur Verfügung steht, ist über die Gleichungen (2) und (3) mit der Molmasse bzw. dem Polymerisationsgrad verbunden. Entsprechend Gl. (2) werden aus n Mol Milchsäure bei der Polykondensation (n-1) Mol Wasser gebildet. Unter Berücksichtigung des Zusammenhangs von zahlenmittlerem Polymerisationsgrad und Reaktionsfortschrittsgrad in den Gl. (3a) und (3b) bedeutet dies beispielsweise, dass aus 900 g (10 mol) einer wasserfreien Milchsäure insgesamt 162 g Wasser gebildet werden, entsprechend 81 g bei Dimerisation oder ca. 146 g, wenn das lineare Decamer mit $M_n$ = 738 g/mol hergestellt wird. Für die gleiche Milchsäuremenge bei Herstellung eines linearen Oligomers mit $M_n$ = 3.000 g/mol müssen ca. 158 g Wasser aus dem System entfernt werden. 12 g Wasser stehen damit selbst beim Übergang von $P_n$ = 10 auf $P_n$ = 41,6 noch für die Dilactidhydrolyse zur Verfügung. Das entspricht einem Hydrolysepotenzial von 0,67 mol/mol bei Abtrennung und Aufarbeitung des Dilactids.

$$n\ CH_3CH(OH)COOH \leftrightarrow [-OCH(CH_3)CO-]_n + (n-1)\ H_2O \qquad \text{Gl. 2}$$

$$P_n = 1/(1-p) \qquad \text{Gl. 3a}$$

$$p = 1 - 1/P_n \qquad \text{Gl. 3b}$$

In der US 6.277.951 wird ausgeführt, dass bei höheren Molmassen die Razemisierung in Form der Bildung von meso-Dilactid zunimmt. So beträgt der meso-Dilactidgehalt bei Einsatz eines Ausgangsoligomers mit $M_n$ = 520 g/mol ca. 5,3 %. Wird die Molmasse des Präpolymers auf 2.500 g/mol erhöht, so steigt parallel dazu der meso-Dilactidgehalt im Destillat auf ca. 11 %. Darüber hinaus sollen Kationen insgesamt zu verstärkter meso-Dilactidbildung führen.

COOH-Gruppenkonzentration und Drehwinkel sind Ausdruck der Reinheit des Rohlactids, wobei die COOH-Gruppenkonzentration direkt lineare Oligomere, vorzugsweise Lactoylmilchsäure, anzeigt. Sie können sowohl durch

estertypische Umesterungsreaktionen unter Beteiligung der Endgruppen als auch durch Hydrolyse des Dilactids gebildet werden. Die optische Aktivität, gemessen am Drehwinkel, zeigt sowohl chemische als auch optische Verunreinigungen des Dilactids an.

Tabelle 2. COOH-Konzentration im Roh-L,L-dilactid in Abhängigkeit von Katalysatortyp und Molmasse des Präpolymers

| Depolymerisationtemperatur: 200 °C | | |
|---|---|---|
| **$M_n$ [g/mol]** | **Katalysator** | **[COOH] [mmol/g]** |
| 550 | $SnCl_2$, gelöst | 1,20 |
| 800 | $SnCl_2$, gelöst | 0,75 |
| 3500 | $SnCl_2$, gelöst | 0,21 |
| 3700 | $SnCl_2$, nanopartikulär | 0,14 |
| 5000 | $SnCl_2$, nanopartikulär | 0,08 |
| 6000 | $SnCl_2$, nanopartikulär | 0,05 |

Tabelle 3. Drehwinkel des Roh-L,L-dilactids in Abhängigkeit von Katalysatortyp und Molmasse des Präpolymers

| Depolymerisationstemperatur: 200 °C | | |
|---|---|---|
| **$M_n$ [g/mol]** | **Katalysator** | **[$\alpha$] [grd]** |
| 550 | $SnCl_2$, gelöst | -235 |
| 800 | $SnCl_2$, gelöst | -247 |
| 3500 | $SnCl_2$, gelöst | -255 |
| 3700 | $SnCl_2$, nanopartikulär | -257 |
| 5000 | $SnCl_2$, nanopartikulär | -260 |
| 6000 | $SnCl_2$, nanopartikulär | -259 |

Im Vergleich dazu beträgt der Drehwinkel von entsprechend dem Stand der Technik gereinigtem L,L-Dilactid -282°. Es ist deutlich zu erkennen, dass ein höheres Molekulargewicht zu einem reineren Produkt führt.

Die ermittelten effektiven Geschwindigkeitskonstanten der Depolymerisation sind komplexer Natur, und sie resultieren aus der Überlagerung der im System ablaufenden chemischen Reaktionen mit der Stoffübertragung des Dilactids aus der Schmelze in die Gasphase bzw. seiner Kondensation zum kristallinen Feststoff. Dieser Systemabhängigkeit Rechnung tragend sind in Tabelle 4 die relativen Geschwindigkeiten für die gewählte Versuchsmethodik aufgeführt.

Tabelle 4. Relative Reaktionsgeschwindigkeit der Dilactidbildung (bezogen auf $SnCl_2$, gelöst) in Abhängigkeit vom Katalysatortyp

| Depolymerisationstemperatur: 200 °C<br>$M_n$ des Präpolymers: 3700 g/mol | |
|---|---|
| **Katalysator** | **Rel. Prozessgeschwindigkeit** |
| $SnCl_2$, gelöst | 1,0 |
| $SnCl_2$, nanopartikulär | 1,4 |
| SnO, gelöst | 0,9 |

(fortgesetzt)

| Katalysator | Rel. Prozessgeschwindigkeit |
|---|---|
| $Sn(oct)_2$, nanopartikulär | 1,5 |
| $Sn(C_2O_4)$, nanopartikulär | 1,4 |

Erfindungsgemäß werden auch in der Polymerisationsstufe auf AEROSIL- bzw. AEROXID-Nanopartikeln fixierte Zinncarboxylate als Polymerisationskatalysatoren eingesetzt. Die Ringöffnungspolymerisation der Dilactide (Schema 6) wurde diskontinuierlich unter Laborbedingungen in einer Glasapparatur mit geschraubtem Blattrührer und kontinuierlich in einem Doppelschneckenextruder mit einem speziell auf diese Massepolymerisation abgestimmten Schneckendesign durchgeführt. Der Polymerisationsverlauf wurde über den Monomerumsatz und die Molmassen von entnommenen Proben verfolgt (Tabellen 6 und 7). In Tabelle 5 ist der Polymerisationsverlauf zum Vergleich mit einem in der Monomerschmelze gelöstem $Sn(oct)_2$ aufgeführt.

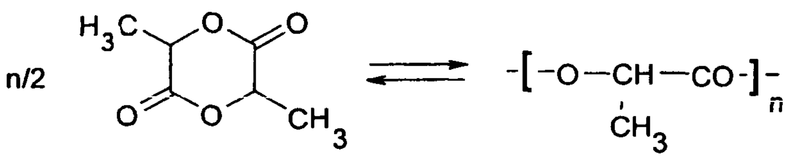

**Schema 6. Ringöffnungspolymerisation der Dilactide**

Die Ringöffnungspolymerisation ist ein äußerst rasch verlaufender Prozess, bei dem der Gleichgewichtsmonomerumsatz von Polymerisationstemperatur und Katalysatorkonzentration bestimmt wird. Unter technisch relevanten Bedingungen wird der Gleichgewichtsumsatz praktisch schon nach wenigen Minuten erreicht. Wie bereits in DE 10113302 sowie DE 10216834 und US 6.657.042 gezeigt wurde, ist bei chargenweiser Versuchsdurchführung der zeitliche Verlauf der Molmasse durch einen ausgeprägten Extremalcharakter der $M_{n,w}$/t-Funktion gekennzeichnet. Durch den Einsatz der katalysatorhaltigen Nanopartikel erfolgt nicht nur eine Abflachung dieser Extremalfunktion, sondern es können auch höhermolekulare Produkte hergestellt werden. Dieser unterschiedliche $M_{n,w}$/t-Verlauf ist insbesondere für die technologische Beherrschbarkeit diskontinuierlicher Prozesse von Vorteil. Synthesemöglichkeiten für höhermolekulare Polymilchsäuren sind von generellem Interesse, da höhermolekulare Heterokettenpolymere geringeren Stabilisierungsaufwand erfordern und sich die thermoplastische Verarbeitung als weniger problematisch erweist. Bei höhermolekularen Kunststoffen wirkt sich ein unvermeidbarer Molmassenabbau bei der Verformung nicht so dramatisch auf die mechanischen Eigenschaften des Endprodukts aus.

Tabelle 5. Monomerumsatz und zahlenmittlere Molmasse der Polymerisation von L,L-Dilactid

| Polymerisationstemperatur: 195 °C<br>Katalysator: $Sn(oct)_2$, gelöst in Monomerschmelze, Konzentration: $1*10^{-4}$ mol/mol | | |
|---|---|---|
| **Zeit [min]** | **Umsatz [%]** | **Mn [g/mol]** |
| 2,5 | 40,0 | 88.000 |
| 5,0 | 80,0 | 99.500 |
| 7,5 | | 94.000 |
| 10 | 86,0 | 83.500 |
| 15 | 89,0 | 77.000 |
| 20 | 91,5 | 76.000 |
| 25 | 92,0 | |

(fortgesetzt)

| Zeit [min] | Umsatz [%] | Mn [g/mol] |
|---|---|---|
| 30 | 95,5 | 73.000 |
| 40 | 96,0 | 73.000 |

Tabelle 6. Monomerumsatz der Polymerisation von L,L-Dilactid in Abhängigkeit von der Katalysatorkonzentration

| Polymerisationstemperatur: 195 °C<br>Katalysator: $Sn(oct)_2$-Nanopartikel | | | |
|---|---|---|---|
| **Zeit [min]** | **Umsatz [%] $0,5*10^{-4}$ [mol/mol]** | **Umsatz [%] $0,75*10^{-4}$ [mol/mol]** | **Umsatz [%] $1,0*10^{-4}$[mol/mol]** |
| 2,5 | 16,0 | | 35,0 |
| 5,0 | 40,0 | 56,0 | 78,5 |
| 7,5 | 50,0 | | |
| 10 | 60,0 | 78,0 | 86,0 |
| 15 | 72,0 | 84,0 | 90,0 |
| 20 | 77,0 | 86,0 | 91,5 |
| 25 | 81,5 | 89,0 | 95,0 |
| 30 | 88,5 | 91,5 | 95,5 |
| 40 | 89,5 | 94,5 | 96,0 |

Tabelle 7. Verlauf der zahlenmittlere Molmasse bei der Polymerisation von L,L-Dilactid in Abhängigkeit von der Katalysatorkonzentration

| Polymerisationstemperatur: 195 °C<br>Katalysator: $Sn(oct)_2$-Nanopartikel | | | |
|---|---|---|---|
| **Zeit [min]** | **$M_n$ [g/mol] $0,5*10^{-4}$ [mol/mol]** | **$M_n$ [g/mol] $0,75*10^{-4}$ [mol/mol]** | **$M_n$ [g/mol] $1,0*10^{-4}$ [mol/mol]** |
| 2,5 | 36.000 | 43.000 | |
| 5,0 | 50.000 | 67.000 | 109.500 |
| 7,5 | 64.500 | 78.000 | 99.000 |
| 10 | 62.000 | 74.500 | 93.500 |
| 15 | | | 87.000 |
| 20 | 60.000 | 71.000 | 86.000 |
| 25 | 61.500 | 66.500 | |
| 30 | 58.000 | 62.500 | 83.000 |
| 40 | 55.500 | 60.000 | 83.000 |

Wie bereits für die Polykondensationsstufe ausgeführt, können mit dem erfindungsgemäßen Verfahren auch in der Polymerisationsstufe Katalysatorkombinationen eingesetzt werden, die eine schonendere Herstellung der Polymilchsäure ermöglichen. Insbesondere die bewährten, beispielsweise in den DE 10113302 und US 6.657.042 beschriebenen Katalysatorsysteme auf Basis von Zinn(II)-carboxylaten und Titanalkoxiden lassen sich durch gemeinsame Fixierung auf den Nanopartikeln vom AEROSIL- oder AEROXID-Typ optimal miteinander kombinieren.

Gemäß vorliegender Erfindung kann ein nanopartikulärer Stabilisator eingesetzt werden, der vorzugsweise zumindest eine(n) an ein Trägermaterial adsorbierte(n) Phosphorverbindung bzw. Komplexbildner für Zinn(II)- und Zinn (IV)-Verbindungen umfasst. Durch ihre molekulare Struktur eignen sich diese hervorragend zur Adsorption an Nanopartikel.

Vorzugsweise sind dabei die zumindest eine Phosphorverbindung eine Phosphinsäure oder ein Derivat davon und der Komplexbildner für Zinn(II)- und Zinn(IV)-Verbindungen Tropolon oder ein Derivat davon. Diese sind mit ihren strukturbedingten hydrophoben und hydrophilen Molekülzentren für stabile Adsorptionen an AEROSILE und damit zum Einsatz in Form von Nanopartikeln besonders geeignet. Besonders bevorzugt ist die Phosphinsäure bzw. deren Derivat aus Alkyl- und Arylphosphinsäuren ausgewählt, insbesondere 9,10-Dihydro-9-oxa-10-phosphaphenanthren-10-oxid. Diese sind im Handel erhältlich und zeichnen sich durch besonders gute stabilisierende Eigenschaften aus.

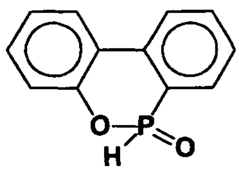

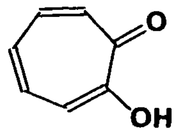

**Schema 7. Strukturen nanopartikulärer Stabilisatoren für Polymilchsäuren (links: Arylphosphinsäureester, rechts: Tropolon)**

Im Verfahren der Erfindung können anhand der Partikelgröße, der Partikelbeladung, der Grenzflächeneigenschaften der beladenen Partikel sowie der Konzentration der Partikel die molekularen Parameter wie Molmasse und Molmassenverteilung sowie zusätzlich dazu die Zusammensetzung bei Copolymeren gesteuert werden. Es können dadurch auf einfache Weise die gewünschten Materialien hergestellt werden. Beispiele für den Einfluss der Katalysatorkonzentration auf den Monomerumsatz und die zahlenmittlere Molmasse sind in den Tabellen 6 und 7 angeführt.

Durch das erfindungsgemäße Verfahren können Polyester mit Molmassen $M_n$ größer 150.000 g/mol bei molekularen Uneinheitlichkeiten $M_w/M_n$ zwischen 1,6 und 2,5 hergestellt werden. Solch hochmolekulare Polyester mit einheitlicher Molmassenverteilung sind nach herkömmlichen Verfahren praktisch nicht zugänglich.

Zudem können strukturgleiche oder strukturdifferente Comonomere copolymerisiert werden. Auf diese Weise können im erfindungsgemäßen Verfahren auf einfache Weise auch hochmolekulare Homopolymere der stereoisomeren Dilactide oder Copolymere mit in weiten Grenzen variabler Zusammensetzung hergestellt werden. Als strukturgleiche Comonomere können für L,L-Dilactid D,D- oder meso-Dilactid zur Copolymerisation eingesetzt werden, als strukturdifferente Comonomere sind beispielsweise Diglykolid, Trimethylencarbonat oder ε-Caprolacton geeignet. Dadurch können Heteropolymere mit den gewünschten Eigenschaften hergestellt werden.

Wie oben erwähnt kann das Verfahren zum Teil oder zur Gänze diskontinuierlich in Rührreaktoren oder Knetern mit Austragschnecke durchgeführt werden. Dies stellt einfache apparative Anforderungen an den Herstellungsprozess. In einer anderen Ausführungsform kann das Verfahren zur Gänze kontinuierlich in Doppelschneckenextrudern durchgeführt werden. Dies bietet den Vorteil der regelmäßigen Herstellung von Polymeren, ohne den Herstellungsprozess unterbrechen zu müssen, was mitunter höhere Molmassen ergibt.

Zur kontinuierlichen Ringöffnungspolymerisation im Doppelschneckenextruder wurde ein Monomer/Katalysatorpartikel-Gemisch volumetrisch dosiert dem Extruder zugeführt. Die apparative Einrichtung gestattete darüber hinaus die gravimetrische Dosierung von Stabilisatoren sowie die Vakuumentmonomerisierung. Die Reaktivextrusionsbedingungen sowie das spezielle Schneckendesign konnten hinsichtlich der angestrebten molekularen Parameter des Polyesters (Molmasse, Molmassenverteilung) sowie einer Stabilisierung des Endprodukts in einem technologisch relevanten Bereich optimal adaptiert werden. In Tabelle 8 ist ein charakteristisches Molmassenprofil über einen längeren Versuchslauf zusammengefasst.

Tabelle 8. Polymerisation von L,L-Dilactid im Doppelschneckenextruder

| |
|---|
| Katalysator: $3*10^{-4}$ mol/mol $Sn(oct)_2$ auf AEROSIL R106<br>Temperaturprofil: 7 Heizzonen 175-205 °C |

(fortgesetzt)

| Zeit [min] | $M_n$ [g/mol] | $M_w$ [g/mol] |
|---|---|---|
| 30 | 94.000 | 197.500 |
| 60 | 103.000 | 215.000 |
| 90 | 105.000 | 219.000 |
| 120 | 107.000 | 220.500 |
| 150 | 111.500 | 221.000 |
| 180 | 110.500 | 221.000 |
| 210 | 113.000 | 222.000 |
| 240 | 107.000 | 220.500 |
| 300 | 109.500 | 217.500 |

In einem zweiten Aspekt betrifft die Erfindung auch nach dem erfindungsgemäßen Verfahren hergestellte Polymilchsäure.

Die Erfindung wird anhand der folgenden Beispiele beschrieben, die nur zur Illustration und nicht als Einschränkung angegeben sind.

**Beispiele**

Beispiel 1

Zur Herstellung der Katalysator- bzw. Stabilisatorpartikel werden die Lösungen der Katalysatoren bzw. Stabilisatoren in Toluen, Aceton, Isopropanol oder Ethylenglykol mit dem AEROSIL oder AEROXID intensiv mittels Dispergierscheibe gerührt und das Lösungs- bzw. Dispergiermittel anschließend unter Normaldruck oder Vakuum abgedampft. Bei den in Tabelle 9 und 10 angeführten, sehr feinteiligen Silizium-, Misch- bzw. Aluminiumoxiden mit Partikelgrößen < 10 bzw. < 15 nm wird das Masseverhältnis von Oxid zu Katalysator bzw. Stabilisator zwischen 1:1 und 4:1 variiert. Bei Katalysatordosierung als Dispersion erfolgt die Redispergierung durch kurzzeitiges Mischen mit einem Intensivrührer (Typ Ultra-Turrax) oder in einem Ultraschallbad.

Tabelle 9. Ausgewählte Beispiele nanopartikulärer Katalysatoren für die Herstellung von Poly-L-, -D- bzw. -D,L-milchsäure aus L-, D- bzw. D,L-Milchsäure

| Katalysator-beispiel | Trägermaterial | Katalysator | Lösungsmittel | Verfahrensstufe |
|---|---|---|---|---|
| 1.1 | AEROSIL R 106 | KR 12 | Toluen | i) |
| 1.2 | - " - | KR 38S | Toluen | i) |
| 1.3 | - " - | DAT | Toluen | i) |
| 1.4 | AEROSIL 300 | Tyzor LA | Isopropanol | i) |
| 1.5 | - " - | Tyzor LA | Aceton | i) |
| 1.6 | AEROSIL COK 84 | KR 38S | Toluen | i) |
| 1.7 | - " - | KR 12 | Toluen | i) |
| 1.8 | - " - | Tyzor LA/$SnCl_2$ | Isopropanol | i) |
| 1.9 | AEROXID Alu C | Tyzor LA | Isopropanol | i) |
| 1.10 | AEROSIL 300 | Tyzor LA/$SnCl_2$ | Isopropanol | i) |
| 2.1 | AEROSIL 300 | $SnCl_2$ | Aceton | ii) |

(fortgesetzt)

| Katalysator-beispiel | Trägermaterial | Katalysator | Lösungsmittel | Verfahrensstufe |
|---|---|---|---|---|
| 2.2 | AEROSIL 380 | $SnCl_2$ | Aceton | ii) |
| 2.3 | AEROSIL R 106 | $Sn(oct)_2$ | Toluen | ii) |
| 2.4 | AEROXID Alu C | $SnCl_2$ | Isopropanol | ii) |
| 3.1 | AEROSIL R 106 | $Sn(oct)_2$ | Toluen | iii) |
| 3.2 | AEROSIL COK 84 | $Sn(oct)_2$ | Toluen | iii) |
| 3.3 | AEROXID Alu C | $Sn(oct)_2$ | Toluen | iii) |
| 3.4 | AEROSIL R 106 | $Sn(Phen)_4$ | Toluen | iii) |
| 3.5 | AEROSIL COK 84 | $Sn(Phen)_4$ | Toluen | iii) |
| 3.6 | AEROSIL R 106 | $Sn(oct)_2$/TTB | Toluen | iii) |
| i): Polykondensation der Milchsäure<br>ii): zyklisierende Depolymerisation<br>iii): Ringöffnungspolymerisation<br>DAT: Düsopropylbis(acetylacetonato)titanat (vgl. Schema 4)<br>TTB: Titantetrabutylat | | | | |

Tabelle 9. Ausgewählte Beispiele nanopartikulärer Stabilisatoren für Poly-L-, -D- bzw. -D,L-milchsäure

| Stabilisator-beispiel | Trägermaterial | Stabilisator | Lösungsmittel | Einsatz |
|---|---|---|---|---|
| 4.1 | AEROSIL R 106 | UKANOL DOP | Totuen | iii) |
| 4.2 | - " - | Tropolon | Toluen | iii) |
| 4.3 | AEROSIL 300 | UKANOL DOP | Aceton | iii) |
| 4.4 | AEROSIL COK 84 | Tropolon | Toluen | iii) |
| 4.5 | - " - | UKANOL DOP | Toluen | iii) |
| 4.6 | AEROXID Alu C | Tropolon | Toluen | iii) |
| 4.7 | - " - | UKANOL DOP | Toluen | iii) |
| UKANOL DOP: 9,10-Dihydro-9-oxa-10-phosphaphenanthren-10-oxid | | | | |

Beispiel 2 (Polykondensation)

1060 g einer 85%igen L-Milchsäure (Versuchsprodukt der Anmelderin) werden in einer Glasapparatur mit Rührer, Außenheizung und temperierbarer Vigreuxkolonne im Vakuum bei 155 °C innerhalb von 2 h vollständig entwässert, wobei das Vakuum so geregelt wird, dass keine Milchsäure über das Destillat abgeführt wird. Nach der Entwässerungsphase wird die Temperatur auf 185 °C erhöht und bei 13 kPa unter Zusatz von Katalysator 1.4 (Dihydroxybis (ammoniumlactato)titan Tyzor® LA/AEROSIL 300) (5 ml Dispersion mit $10^{-4}$ mol Katalysator/mol Milchsäure) 4 h lang polykondensiert. Von dem Polykondensationsprodukt werden Ausbeute, Molmasse sowie der [COOH]-Gehalt bestimmt.

Ausbeute: 700 g
$M_n$: 2.600 g/mol
[COOH]: 0,3 mmol/g

Beispiel 3 (Polykondensation)

900 g einer wasserfreien L-Milchsäure (Versuchsprodukt der Anmelderin) werden in einer Glasapparatur mit Rührer, Außenheizung und temperierbarer Vigreuxkolonne im Vakuum bei Temperaturen von 150-210 °C in Gegenwart

von 5 g Katalysator 1.2 (Isopropyltri(dioctylphosphato)titanat (KR 38 S, AEROSIL R 106) ($3*10^{-4}$ mol Katalysator pro mol Milchsäure) 3 h lang polykondensiert. Das Temperatur- und Vakuumprogramm ist so eingestellt, dass keine Milchsäure über das Destillat abgeführt wird. Das Produkt wird im Vakuum bei 155 °C innerhalb von 2 h vollständig entwässert. Als Endvakuum werden 13 kPa gewählt. Von dem Polykondensationsprodukt werden analog Beispiel 2 Ausbeute, Molmasse sowie der [COOH]-Gehalt bestimmt.

| | |
|---|---|
| Ausbeute: | 730 g |
| $M_n$: | 3.600 g/mol |
| [COOH]: | 0,3 mmol/g |

Beispiel 4 (Polykondensation)

Analog Beispiel 2 werden 1060 g einer 85%igen L-Milchsäure (Versuchsprodukt der Anmelderin) im Vakuum bei 155 °C innerhalb von 2 h vollständig entwässert und anschließend auf 200 °C erhitzt und bei 13 kPa unter Zusatz des Katalysators 1.8 (Dihydroxybis(ammoniumlactato)titan Tyzor® LA/$SnCl_2$/AEROSIL COK 84) (15 ml Dispersion mit $2*10^{-4}$ mol Tyzor® LA/$3*10^{-4}$ mol $SnCl_2$/mol Milchsäure) 2 h lang polykondensiert.

| | |
|---|---|
| Ausbeute: | 700 g |
| $M_n$: | 4.200 g/mol |
| [COOH]: | 0,1 mmol/g |

Beispiel 5 (Polykondensation)

In einem flüssigbeheizten 25-I-Laborrührreaktor, ausgerüstet mit einem Ankerrührer, Mantelheizung, Bodenventil und temperierbarer Kolonne sowie mit Erfassung von Innen- und Manteltemperatur, werden 15 kg einer 65%igen L-Milchsäure im Vakuum bei 120 bis 160 °C (brüdengesteuertes Temperaturprogramm) entwässert und anschließend in Gegenwart des Katalysators 1.10 (Dihydroxybis(ammoniumlactato)titan Tyzor LA/$SnCl_2$/AEROSIL 300) (30 g Feststoff mit $2*10^{-4}$ mol Tyzor® LA/$3*10^{-4}$ mol $SnCl_2$/mol Milchsäure) 4 h lang bei 190°C polykondensiert.

| | |
|---|---|
| Ausbeute: | 7,5 kg |
| $M_n$: | 5.800 g/mol |
| [COOH]: | 0,1 mmol/g |

Beispiel 6 (Polykondensation)

Analog Beispiel 2 werden 920 g einer kommerziellen D,L-Milchsäure unter Zusatz des Katalysators 1.10 (Dihydroxybis(ammoniumlactato)titan Tyzor LA/$SnCl_2$/AEROSIL 300) (5 ml Dispersion mit $2*10^{-4}$ mol Tyzor® LA/$3*10^{-4}$ mol $SnCl_2$/mol Milchsäure) polykondensiert und aufgearbeitet. Von dem Polykondensationsprodukt werden analog Beispiel 2 Ausbeute, Molmasse sowie der [COOH]-Gehalt bestimmt.

| | |
|---|---|
| Ausbeute: | 700 g |
| $M_n$: | 4.800 g/mol |
| [COOH]: | 0,1 mmol/g |

Beispiel 7 (Polyumesterung)

1180 g Ethyl-L-lactat (Versuchsprodukt der Anmelderin) werden in einer Glasapparatur mit Rührer, Außenheizung und temperierbarer Vigreuxkolonne bei 200 °C in Gegenwart des Katalysators 1.4 (Dihydroxybis(ammoniumlactato) titan Tyzor® LA/AERO-SIL 300) (15 ml Dispersion mit $3*10^{-4}$ mol Katalysator/mol Milchsäure) polykondensiert. Das abgespaltene Ethanol wird über die Kolonne abgeführt und kann für erneute Veresterungen von L-Milchsäure direkt verwendet werden. Zur vollständigen Abspaltung der Ethylestergruppen wird die Reaktion nach Abführung der Hauptmenge des sich bildenden Ethanols unter Vakuum zu Ende geführt.

| | |
|---|---|
| Ausbeute: | 700 g |
| $M_n$: | 3.500 g/mol |

(fortgesetzt)

[COOH]: 0,1 mmol/g

Beispiel 8 (zyklisierende Depolymerisation)

720 g der entsprechend den Beispielen 2 bis 5 und 7 hergestellten Poly-L-milchsäure werden in einer Glasapparatur mit Rührer, Außenheizung und temperierbarer Füllkörperkolonne mit ebenfalls temperierbarem Kühler unter Vakuum von 1,3-2,0 kPa in Gegenwart des Katalysators 2.1 ($SnCl_2$/AEROSIL 300) (5 ml Dispersion mit $3*10^{-4}$ mol Katalysator/mol Monomereinheit) erhitzt. In Abhängigkeit von der gewählten Depolymerisationsgeschwindigkeit wird der Reaktionsansatz dann auf 185-220 °C erhitzt und das gebildete L,L-Dilactid über die Kolonne abgeführt, wobei die Kühlertemperatur zur Vermeidung von Kristallisation auf 100 °C gehalten wird. Die Depolymerisation wird nach ca. 80 % Umsatz abgebrochen, um Vercrackung der Polymerschmelze mit Bildung unerwünschter Abbauprodukte in der Polymeschmelze zu vermeiden. Auf diese Weise lässt sich die Apparatur problemlos entleeren, oder es kann neue Polymerschmelze eingefüllt werden und die Depolymerisation ohne neuen Katalysatorzusatz weitergeführt werden.

Ausbeute: 570 g

Beispiel 9 (zyklisierende Depolymerisation)

Analog Beispiel 9 werden 720 g einer in Gegenwart von Katalysator 1.8 (Tyzor LA/$SnCl_2$/AEROSIL COK 84) bzw. 1.10 (Tyzor LA/$SnCl_2$/AEROSIL 300) hergestellten Poly-L-milchsäure ohne weiteren Katalysatorzusatz depolymerisiert.

Ausbeute: 560 g

Beispiel 10 (Reinigung der Rohdilactide)

In Abhängigkeit vom Substrat und den gewählten Depolymerisationsbedingungen werden Roh-L,L-dilactide mit den in den Tabellen 2 und 3 bereits angegebenen Carboxylgruppengehalten bzw. Drehwinkeln [$\alpha$] erhalten.

Zur Feinreinigung werden die Rohlactide zur Abtrennung von Restmilchsäure, linearen Oligomeren und Restwasser im Vakuum destilliert oder aus Essigsäureethylester in Gegenwart von $CaCO_3$ als Säurefänger umkristallisiert. Das so destillativ oder durch Kristallisation gereinigte L,L-Dilactid für die Massepolymerisation ist charakterisiert durch:

| | |
|---|---|
| $T_m$: | 96 bis 97 °C |
| [$\alpha$]: | -268 bis -270 ° |
| [COOH]: | 8 $\mu$mol/g |

Durch Destillation oder Kristallisation gereinigtes D,L-Dilactid weist folgende Daten auf:

| | |
|---|---|
| $T_m$: | 126 bis 127 °C |
| [COOH]: | 10 $\mu$mol/g |

Beispiel 11 (Ringöffnungspolymerisation, diskontinuierlich in einem zylindrischen Glasgefäß)

36 g entsprechend den Beispielen 8 oder 9 hergestelltes und entsprechend Beispiel 11 gereinigtes sowie sorgfältig getrocknetes L,L-Dilactid werden in einem zylindrischen Glasreaktor mit einem randgängigen geschraubten Blattrührer-(Schraubenrührer) unter Inertgas in einem Temperierbad aufgeschmolzen. Der aus Glas gefertigte und bis zum Boden reichende Schraubenrührer durchmischt die Schmelze axial. Der Rührer wird mit einer Drehzahl von 100 $min^{-1}$ betrieben. Nach Erreichen der Solltemperatur werden der gerührten Monomerschmelze 1 ml der Katalysatordispersion 3.1 ($Sn(oct)_2$/AEROSIL R 106 in Toluen; entsprechend $7,5*10^{-5}$ mol/mol $Sn(oct)_2$/mol Monomereinheit) zugesetzt. Zur Ermittlung des Polymerisationsverlaufs können der Schmelze über einen seitlichen Ansatz Proben entnommen werden, von denen Momomerumsatz und Molmasse bestimmt werden. Die Umsatzbestimmung erfolgte gravimetrisch durch Umfällen der Polymilchsäuren aus Chloroform als Lösungsmittel und einem Methanol/Diethylether-Gemisch als Fällmitel. Die Molmassen wurden mittels GPC in $CH_2Cl_2$ vermittelt. Zur Kalibrierung wurden Polystyrenstandards verwendet.

Nach einer Polymerisationszeit von 20 min wurden ermittelt:

| | |
|---|---|
| Monomerumsatz: | U = 94 % |
| Molmasse: | $M_n$ = 60.000 g/mol |
| Molekulare Uneinheitlichkeit: | $M_n/M_w$ = 2,1 |

Beispiel 12 (Ringöffnungspolymerisation, diskontinuierlich in einem zylindrischen Glasgefäß)

Analog Beispiel 11 werden 36 g gereinigtes L,L-Dilactid in Gegenwart von 1 ml der Katalysatordispersion 3.6 ($Sn(oct)_2$/Titantetrabutylat/AEROSIL R 106 in Toluen; entsprechend 1,5 *$10^{-4}$mol Katalysatorkombination/mol Monomereinheit) polymerisiert und aufgearbeitet. Nach einer Polymerisationszeit von 20 min wurde ermittelt:

| | |
|---|---|
| Monomerumsatz: | U = 96 % |
| Molmasse: | $M_n$ = 75.000 g/mol |
| Molekulare Uneinheitlichkeit: | $M_n/M_w$ = 2,0 |

Beispiel 13 (Ringöffnungspolymerisation, kontinuierlich im Doppelschneckenextruder)

Für die kontinuierliche Massepolymerisation des L,L-Dilactids in Form eines Reaktivextrusionsprozesses wurde ein dichtkämmender, gleichsinnig drehender Doppelschneckenextruder mit Innentemperatur- und Drehmomentregelung verwendet. Der eingesetzte Doppelschneckenextruder weist ein (UD)-Verhältnis von 35 mit modular aufgebauter Schnecke auf, um flexibel die Schneckenkonfigurierung hinsichtlich Transport-, Knet- und Stauelementen den Prozessbedingungen und Endproduktparametern optimal anpassen zu können.

1000 g in kristalliner Pulverform vorliegendes L,L-Dilactid, getrocknet im Vakuumtrockenschrank bei 40°C über $P_4O_{10}$, wurde mit Katalysator 3.1 ($Sn(oct)_2$/AEROSIL 106) in Form der trockenen Nanopartikel (5 g entsprechend 1,5 * $10^{-4}$ mol Katalysator/mol Monomereinheit) in einem Labortaumelmischer intensiv vermischt. Die Dosierung des Lactid/Katalysator-Gemisches erfolgte mittels volumetrischer Dosierung über Dosierschnecken. Das über die Heizzonen eingestellte Temperaturprofil im Extruder lag zwischen 180 und 205 °C. Die ausgetragene Polymerschmelze wurde über ein Transportband mit Luftkühlung einem Granulator zugeführt. Von dem Polymer wurden nach Extraktion Umsatz und Molmasse bestimmt.

| | |
|---|---|
| Umsatz: | 94,0 % |
| $M_n$: | 72.000 g/mol |
| $M_w$: | 130.000 g/mol |

Beispiel 14 (Ringöffnungspolymerisation, kontinuierlich im Doppelschneckenextruder

Analog Beispiel 13 wurden 1000 g L,L-Dilactid mittels volumetrischer Dosierung einem Doppelschneckenextruder zugeführt. Ergänzend zu Beispiel 13 wurde die Polymerschmelze stabilisiert. Katalysator 3.1 ($Sn(oct)_2$/AEROSIL 106) und Stabilisator 4.1 (UKANOL DOP/AEROSIL 106) wurden in Form ihrer Dispersionen in Toluen getrennt mittels Mikrodosierpumpen der Monomer- (Katalysator 25 ml entsprechend 7,5*$10^{-5}$ mol/mol) bzw. Polymerschmelze (Stabilisator 25 ml entsprechend 3*$10^{-4}$ mol/mol) an auseinander liegenden Heizzonen zugeführt. Die Entfernung des Restmonomers erfolgte bei dieser Versuchsanordnung mittels Vakuumentmonomerisierung direkt vor dem Austrag der Polymerschmelze aus dem Extruder. Analog zu Beispiel 13 wurde die monomerfreie Polymerschmelze über ein Transportband dem Granulator zugeführt. Von dem Polymer wurden direkt Umsatz und Molmasse bestimmt.

| | |
|---|---|
| Umsatz: | 92,5 % |
| $M_{n:}$ | 108.000 g/mol |
| $M_{w:}$ | 220.000 g/mol |

## Patentansprüche

1. Verfahren zur Herstellung von hochmolekularen Homo- und Copolyestern von L-, D- bzw. D,L-Milchsäure, umfassend die Verfahrensstufen i) Polykondensation von Milchsäure oder Polyumesterung von Estern davon zu polymerer

Milchsäure, ii) zyklisierende Depolymerisation der polymeren Milchsäure zu Dilactiden und iii) Ringöffnungspolymerisation der Dilactide bzw. von Gemischen davon mit geeigneten Comonomeren,
**dadurch gekennzeichnet, dass** in zumindest einer der Verfahrensstufen i) bis iii) ein partikulärer Katalysator und/oder ein partikulärer Stabilisator, die jeweils einen mittleren Partikeldurchmesser von 1 bis 100 nm aufweisen, in einem heterogenen Reaktionsgemisch eingesetzt wird/Werden.

**2.** Verfahren nach Anspruch 1, **dadurch gekennzeichnet, dass** in allen Verfahrensstufen i) bis iii) ein partikulärer Katalysator und/oder ein partikulärer Stabilisator eingesetzt wird/werden.

**3.** Verfahren nach Anspruch 1 oder 2, **dadurch gekennzeichnet, dass** der partikuläre Katalysator bzw. Stabilisator einen mittleren Partikeldurchmesser von 3 bis 20 nm aufweist.

**4.** Verfahren nach einem der Ansprüche 1 bis 3, **dadurch gekennzeichnet, dass** der partikuläre Katalysator bzw. Stabilisator ein partikuläres anorganisches Oxid als Trägermaterial umfasst.

**5.** Verfahren nach Anspruch 4, **dadurch gekennzeichnet, dass** das partikuläre anorganische Oxid Siliziumdioxid, Aluminiumoxid oder ein Gemisch davon ist.

**6.** Verfahren nach Anspruch 4 oder 5, **dadurch gekennzeichnet, dass** ein hydrophober Katalysator bzw. Stabilisator zusammen mit einem hydrophoben Trägermaterial eingesetzt wird.

**7.** Verfahren nach Anspruch 4 oder 5, **dadurch gekennzeichnet, dass** ein hydrophiler Katalysator bzw. Stabilisator zusammen mit einem hydrophilen Trägermaterial eingesetzt wird.

**8.** Verfahren nach einem der Ansprüche 4 bis 7, **dadurch gekennzeichnet, dass** ein partikulärer Katalysator eingesetzt wird, der zumindest eine an das Trägermaterial adsorbierte organische bzw. anorganische Metallverbindung umfasst.

**9.** Verfahren nach Anspruch 8, **dadurch gekennzeichnet, dass** die zumindest eine organische bzw. anorganische Metallverbindung abhängig von der Verfahrensstufe aus Titan-, Zirkonium- und Zinn-Verbindungen ausgewählt wird.

**10.** Verfahren nach einem der Ansprüche 4 bis 9, **dadurch gekennzeichnet, dass** in Verfahrensstufe i) ein partikulärer Katalysator eingesetzt wird, der als an den Träger adsorbierte Metallverbindung hydrolysestabile Komplexe von Titan bzw. Zirkonium, entsprechend der Struktur

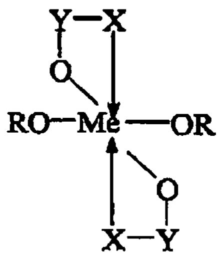

worin
Me: Ti, Zr;
R: -H, -Alkyl, Aryl, -PO(OR')$_2$. -HPOOR', -SO$_2$R'; X: -O-, -S-; und
Y: >CH-, >C<.

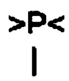

sind, aufweist.

**11.** Verfahren nach Anspruch 10, **dadurch gekennzeichnet, dass** die Komplexe von Titan oder Zirkonium weitere Funktionalitäten auf den ausgewählten Liganden aufweisen.

12. Verfahren nach Anspruch 10 oder 11, **dadurch gekennzeichnet, dass** die hydrolysestabilen Komplexe Chelatkomplexe von Titan bzw. Zirkonium in Kombination mit Zinn(II)-halogeniden sind.

13. Verfahren nach Anspruch 8 oder 9, **dadurch gekennzeichnet, dass** in Verfahrensstufe ii) ein partikulärer Katalysator eingesetzt wird, der als an den Träger adsorbierte Metallverbindung zumindest eine aus Zinn(II)-halogeniden bzw. Zinn(II)-carboxylaten ausgewählte Verbindung aufweist.

14. Verfahren nach Anspruch 8 oder 9, **dadurch gekennzeichnet, dass** in Verfahrensstufe iii) ein partikulärer Katalysator eingesetzt wird, der als an den Träger adsorbierte Metallverbindung zumindest eine aus organischen Zinn(II)- bzw. Zinn(IV)-Verbindungen ausgewählte Verbindung aufweist.

15. Verfahren nach Anspruch 14, **dadurch gekennzeichnet, dass** der partikuläre Katalysator als an den Träger adsorbierte Metallverbindung zumindest eine organische Zinn(II)- bzw. Zinn(IV)-Verbindung in Kombination mit zumindest einem Titan(IV)-alkoxid aufweist.

16. Verfahren nach einem der Ansprüche 4 bis 15, **dadurch gekennzeichnet, dass** ein partikulärer Stabilisator eingesetzt wird, der zumindest eine(n) an ein Trägermaterial adsorbierte(n) Phosphorverbindung und/oder Komplexbildner für Zink(II)- und Zinn(IV)-Verbindungen umfasst.

17. Verfahren nach Anspruch 16, **dadurch gekennzeichnet, dass** zumindest eine Phosphorverbindung eingesetzt wird, die eine Phosphinsäure oder ein Derivat davon ist.

18. Verfahren nach Anspruch 17, **dadurch gekennzeichnet, dass** die Phosphinsäure bzw. das Phosphinsäurederivat aus Alkyl- und Arylphosphinsäuren und Derivaten davon ausgewählt ist.

19. Verfahren nach Anspruch 18, **dadurch gekennzeichnet, dass** das Phosphinsäurederivat 9,10-Dihydro-9-oxa-10-phosphaphenanthren-10-oxid ist.

20. Verfahren nach einem der Ansprüche 16 bis 19, **dadurch gekennzeichnet, dass** zumindest ein Komplexbildner eingesetzt wird, der Tropolon oder ein Derivat davon ist.

21. Verfahren nach einem der vorangegangenen Ansprüche, **dadurch gekennzeichnet, dass** vor den oder während der Verfahrensstufen i) bis iii) zumindest ein Schritt zur Verhinderung der Agglomeration des partikulären Katalysators bzw. Stabilisators durchgeführt wird.

22. Verfahren nach Anspruch 21, **dadurch gekennzeichnet, dass** als Schritt zur Verhinderung von Agglomeration eine Oberflächenbehandlung des Katalysators bzw. Stabilisators durchgeführt wird.

23. Verfahren nach einem der vorangegangenen Ansprüche, **dadurch gekennzeichnet, dass** die in Verfahrensstufe ii) erhaltenen Rohdilactide vor der Durchführung von Verfahrensstufe iii) durch Rektifikation, Schmelze- oder Lösungskristallisation gereinigt werden.

24. Verfahren nach einem der vorangegangenen Anspruche, **dadurch gekennzeichnet, dass** in Verfahrensstufe iii) strukturgleiche oder strukturdifferente Comonomere copolymerisiert werden.

25. Verfahren nach Anspruch 24, **dadurch gekennzeichnet, dass** als strukturgleiche Comonomere für L,L-Dilactid D,D- oder meso-Dilactid copolymerisiert werden.

26. Verfahren nach Anspruch 24, **dadurch gekennzeichnet, dass** als strukturdifferente Comonomere Diglykolid, Trimethylencarbonat oder ε-Caprolacton copolymerisiert werden.

27. Verfahren nach einem der vorangegangenen Ansprüche, **dadurch gekennzeichnet, dass** alle Verfahrensstufen kontinuierlich in Rührreaktoren oder Kneter mit Austragschnecke durchgeführt werden.

28. Verfahren nach einem der Ansprüche 1 bis 26, **dadurch gekennzeichnet, dass** zumindest eine Verfahrensstufe diskontinuierlich in Doppelschneckenextrudern durchgeführt wird.

## Claims

1. A method for the production of high-molecular homo- and copolyesters of L-, D- and D,L-lactic acids that comprises the following process steps: i) the polycondensation of lactic acid or polytransesterification of esters thereof to give polymeric lactic acid, ii) the cyclizing depolymerization of the polymeric lactic acid to give lactides, and iii) the ring-opening polymerization of the lactides or mixtures thereof with suitable comonomers,
**characterized in that**, in at least one of the process steps i) to iii), a particulate catalyst and/or a particulate stabilizer, each having an average particle diameter of 1 to 100 nm, is/are used in a heterogeneous reaction mixture.

2. The method according to claim 1, **characterized in that** a particulate catalyst and/or a particulate stabilizer is used in all the process steps i) to iii).

3. The method according to claim 1 or 2, **characterized in that** the particulate catalyst or particulate stabilizer has an average particle diameter of 3 to 20 nm.

4. The method according to any one of the claims 1 to 3, **characterized in that** the particulate catalyst or particulate stabilizer comprises a particulate inorganic oxide as a carrier material.

5. The method according to claim 4, **characterized in that** the particulate inorganic oxide is silica, alumina or a mixture thereof.

6. The method according to claim 4 or 5, **characterized in that** a hydrophobic catalyst or stabilizer is used together with a hydrophobic carrier material.

7. The method according to claim 4 or 5, **characterized in that** a hydrophilic catalyst or stabilizer is used together with a hydrophilic carrier material.

8. The method according to any one of the claims 4 to 7, **characterized in that** a particulate catalyst that comprises at least one organic or inorganic metal compound adsorbed to the carrier material is used.

9. The method according to claim 8, **characterized in that** the at least one organic or inorganic metal compound can, depending on the process step, be selected from titanium, zirconium and tin compounds.

10. The method according to any one of the claims 4 to 9, **characterized in that**, in process step i), a particulate catalyst is used having, as a metal compound adsorbed to the carrier, hydrolysis-resistant complexes of titanium or zirconium having the following structure:

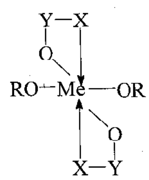

wherein
Me: Ti, Zr;
R: -H, -Alkyl, -Aryl, $-PO(OR')_2$, -HPOOR', $-SO_2R'$; X: -O-, -S-; and Y: >CH-, >C<,

>P<.
|

11. The method according to claim 10, **characterized in that** the complexes of titanium or zirconium have further functionalities on the ligands selected.

12. The method according to claim 10 or 11, **characterized in that** the hydrolysis-resistant complexes are chelate complexes of titanium or zirconium in combination with tin(II) halides.

**13.** The method according to claim 8 or 9 **characterized in that**, in process step ii), a particulate catalyst having, as a metal compound adsorbed to the carrier, at least one compound selected from tin(II) halides or tin(II) carboxylates is used.

**14.** The method according to claim 8 or 9 **characterized in that**, in process step iii), a particulate catalyst having, as a metal compound adsorbed to the carrier, at least one compound selected from organic tin(11) or tin(IV) compounds is used.

**15.** The method according to claim 14, **characterized in that** the particulate catalyst has, as a metal compound adsorbed to the carrier, at least on organic tin(II) or tin(IV) compound in combination with at least one titanium(IV) alkoxide.

**16.** The method according to any one of the claims 4 to 15, **characterized in that** a particulate stabilizer comprising at least one phosphorus compound and/or complexing agent for tin(II) and tin(IV) compounds, adsorbed to a carrier material, is used.

**17.** The method according to claim 16, **characterized in that** at least one phosphorus compound being a phosphinic acid or a derivative thereof is used.

**18.** The method according to claim 17, **characterized in that** the phosphinic acid or the phosphinic acid derivative is selected from alkyl and aryl phosphinic acids and derivatives thereof.

**19.** The method according to claim 18, **characterized in that** the phosphinic acid derivative is 9,10-dihydro-9-oxa-10-phosphaphenanthrene-10-oxide.

**20.** The method according to any one of the claims 16 to 19, **characterized in that** at least one complexing agent being tropolone or a derivative thereof is used.

**21.** The method according to any one of the preceding claims, **characterized in that**, before or during the process steps i) to iii), at least one step for preventing the agglomeration of the particulate catalyst or stabilizer is carried out.

**22.** The method according to claim 21, **characterized in that**, as the step for preventing agglomeration, a surface treatment of the catalyst or stabilizer is carried out.

**23.** The method according to any one of the preceding claims, **characterized in that** the raw lactides obtained in process step ii) are purified by rectification, melt or solution crystallization before process step iii) is conducted.

**24.** The method according to any one of the preceding claims, **characterized in that**, in process step iii), structurally equal or structurally different comonomers are copolymerized.

**25.** The method according to claim 24 **characterized in that**, as the structurally equal comonomers for L-lactide, D- or meso-lactide is copolymerized.

**26.** The method according to claim 24, **characterized in that** diglycolide, trimethylene carbonate or ε-caprolactone are copolymerized as the structurally different comonomers.

**27.** The method according to any one of the preceding claims, **characterized in that** all process steps are conducted continuously in stirred reactors or kneaders with discharge screws.

**28.** The method according to any one of the claims 1 to 26, **characterized in that** at least one process step is conducted discontinuously in double screw extruders.

**Revendications**

**1.** Procédé pour la production des co- et homo-polyesters de poids moléculaire élevé de l'acide lactique L, D ou D,L, comprenant les étapes de procédé suivantes:

i) la polycondensation de l'acide lactique ou la polytransestérification des esters de l'acide lactique pour obtenir

de l'acide lactique polymérique, ii) la cyclopolymérisation des acides lactiques polymériques pour obtenir des lactides et iii) la polymérisation par ouverture de cycle des lactides ou des mélanges des lactides avec des comonomères appropriés,
**caractérisé en ce qu'**un catalyseur particulaire et/ou un stabilisant particulaire, ayant un diamètre moyen des particules de 1 à 100 nm, est/sont utilisé/s pour au moins une des étapes de procédé i) à iii) sous forme d'un mélange réactionnel hétérogène.

**2.** Procédé selon la revendication 1, **caractérisé en ce que** ledit catalysateur particulaire et/ou ledit stabilisant particulaire est/sont utilisé/s pour toutes les étapes de procédé.

**3.** Procédé selon la revendication 1 ou 2, **caractérisé en ce que** ledit catalyseur particulaire et ledit stabilisant particulaire ont un diamètre moyen des particules de 3 à 20 nm.

**4.** Procédé selon l'une des revendications 1 à 3, **caractérisé en ce que** ledit catalyseur particulaire ou ledit stabilisant particulaire comprend un oxyde inorganique particulaire comme support.

**5.** Procédé selon la revendication 4, **caractérisé en ce que** ledit oxyde inorganique particulaire est le dioxyde de silicium, l'oxyde d'aluminium ou un mélange des deux.

**6.** Procédé selon la revendication 4 ou 5, **caractérisé en ce qu'**un catalyseur hydrophobe ou un stabilisant hydrophobe est utilisé avec un support hydrophobe.

**7.** Procédé selon la revendication 4 ou 5, **caractérisé en ce qu'**un catalyseur hydrophile ou un stabilisant hydrophobe est utilisé avec un support hydrophile.

**8.** Procédé selon l'une des revendications 4 à 7, **caractérisé en ce qu'**un catalyseur particulaire qui comprend au moins un composé métallique organique ou inorganique, adsorbé audit support, est utilisé.

**9.** Procédé selon la revendication 8, **caractérisé en ce que** ledit au moins un composé métallique organique ou inorganique est choisi des composés de titane, de zirconium et d'étain, selon l'étape respective de procédé.

**10.** Procédé selon l'une des revendications 4 à 9, **caractérisé en ce que**, pour l'étape de procédé i), un catalyseur particulaire est utilisé, ledit catalyseur particulaire comprenant des complexes de titane ou de zirconium, résistants à l'hydrolyse et ayant la structure

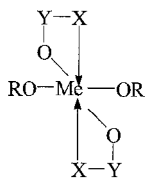

où
Me: Ti, Zr;
R: -H, -Alkyl, -Aryl, $-PO(OR')_2$, -HPOOR', $-SO_2R'$; X: -O-, -S-; et Y: >CH-, >C<,

>P<
|

comme le composé métallique adsorbé audit support.

**11.** Procédé selon la revendication 10, **caractérisé en ce que** lesdits complexes de titane ou de zirconium ont d'autres fonctionnalités aux ligands choisis.

**12.** Procédé selon la revendication 10 ou 11, **caractérisé en ce que** lesdits complexes résistants à l'hydrolyse sont des chélates de titane ou de zirconium en combinaison avec les halogénures stanneux.

**13.** Procédé selon la revendication 8 ou 9, **caractérisé en ce qu'**un catalyseur particulaire qui comprend au moins un composé choisi des halogénures stanneux et des carboxylates stanniques comme ledit composé métallique adsorbé audit support est utilisé pour l'étape de procédé ii).

**14.** Procédé selon la revendication 8 ou 9, **caractérisé en ce qu'**un catalyseur particulaire qui comprend au moins un composé choisi des halogénures stanneux organiques et des carboxylates stanniques organiques comme ledit composé métallique adsorbé audit support est utilisé pour l'étape de procédé ii).

**15.** Procédé selon la revendication 14, **caractérisé en ce que** ledit catalyseur particulaire qui comprend au moins un composé stanneux ou stannique organique en combinaison avec au moins un ester d'acide titanique comme ledit composé métallique adsorbé audit support.

**16.** Procédé selon l'une des revendications 4 à 15, **caractérisé en ce qu'**un stabilisant particulaire qui comprend au moins un composé phosphorique et/ou au moins un complexant pour les composés stanneux et stanniques, adsorbé (s) audit support, est utilisé.

**17.** Procédé selon la revendication 16, **caractérisé en ce qu'**au moins un composé phosphorique qui est un acide phosphinique ou un dérivé de celui-ci est utilisé.

**18.** Procédé selon la revendication 17, **caractérisé en ce que** ledit acide phosphinique ou ledit dérivé de l'acide phosphinique est choisi des acides phosphiniques alkyliques et aryliques et des dérivés de ceux-ci.

**19.** Procédé selon la revendication 18, **caractérisé en ce que** ledit dérivé de l'acide phosphinique est le 9,10-diyhdro-9-oxa-10-phosphaphénantrène-10-oxyde.

**20.** Procédé selon l'une des revendications 16 à 19, **caractérisé en ce qu'**au moins un agent complexant qui est de la tropolone ou un dérivé de celle-ci est utilisé.

**21.** Procédé selon l'une des revendications précédentes, **caractérisé en ce qu'**au moins une étape pour prévenir l'agglomération du catalyseur particulaire ou du stabilisant particulaire est réalisée avant ou au cours des étapes de procédé i) à iii).

**22.** Procédé selon la revendication 21, **caractérisé en ce qu'**un traitement de la surface du catalyseur ou du stabilisant est implémenté comme l'étape pour prévenir l'agglomération.

**23.** Procédé selon l'une des revendications précédentes, **caractérisé en ce que** les lactides bruts obtenus par l'étape ii) sont purifiés par une rectification ou une cristallisation de fusion ou de solution avant la réalisation de l'étape iii).

**24.** Procédé selon l'une des revendications précédentes, **caractérisé en ce que** des co-monomères de même structure ou de structure différente sont co-polymérisés par l'étape iii).

**25.** Procédé selon la revendication 24, **caractérisé en ce que** le lactide D ou le méso-lactide sont co-polymérisés comme co-monomères de la même structure que le lactide L.

**26.** Procédé selon la revendication 24, **caractérisé en ce que** le diglycolide, le carbonate de triméthylène ou le ε-caprolactone sont co-polymérisés comme co-monomères de structure différente.

**27.** Procédé selon l'une des revendications précédentes, **caractérisé en ce que** toutes les étapes de procédé sont réalisées de manière continue dans des réacteurs agités ou des pétrins avec des vis de décharge.

**28.** Procédé selon l'une des revendications 1 à 26, **caractérisé en ce qu'**au moins une étape de procédé est réalisée de manière discontinue dans des extrudeuses à deux vis.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6277951 B
- US 6005067 A
- US 5357035 A
- US 6291597 B
- CA 2128509
- US 5844066 A
- US 5616657 A
- US 5605981 A
- US 5403897 A
- US 5194473 A
- WO 9836008 A
- GB 2407572 A
- WO 9802480 A
- DE 69905016
- US 6489508 B
- US 20040014991 A
- US 5770682 A
- US 5866677 A
- JP 7206851 B
- US 6657042 B
- WO 0387191 A
- DE 69328822
- EP 0615532 A
- DE 69330046
- DE 10113302
- DE 10216834


### In der Beschreibung aufgeführte Nicht-Patentliteratur


- **G. Rafler.** *Praxis der Naturwissenschaften (PdN-Chis),* 2005, vol. 54 (H7), 12
- **G. Rafler et al.** *Acta Polymerica,* 1988, vol. 44, 315
- **H.-G. Elias.** Makromoleküle. 1999
- **H.-R. Kricheldorf.** *Macromol. Symp.,* 2000, vol. 153, 55
- *Chemosphere,* 2001, vol. 43, 49
- **A. Löfgren et al.** *J. Macromol. Sci. - Rev. Macromol. Chem. Phys. C,* 1995, vol. 35, 379
- **G. Rafler ; J. Lang ; M. Jobmann ; I. Bechthold.** *Macromol. Mater. Eng.,* 2001, vol. 286, 761